**Europäisches Patentamt**

(19) **European Patent Office**

**Office européen des brevets**

(11) Publication number : **0 412 655 B1**

## (12) EUROPEAN PATENT SPECIFICATION

(45) Date of publication of patent specification :
**18.10.95 Bulletin 95/42**

(21) Application number : **90307569.5**

(22) Date of filing : **11.07.90**

(51) Int. Cl.$^6$ : **H01M 2/06,** H01M 2/08,
H01B 17/30, C03C 29/00,
C03C 8/24

(54) **Electrical device with feedthroughs comprising glass seals.**

(30) Priority : **12.07.89 US 379481**

(43) Date of publication of application :
**13.02.91 Bulletin 91/07**

(45) Publication of the grant of the patent :
**18.10.95 Bulletin 95/42**

(84) Designated Contracting States :
**DE FR GB IT NL SE**

(56) References cited :
EP-A- 0 262 073
EP-A- 0 404 435
FR-A- 2 531 064
GB-A- 1 518 483
GB-A- 2 056 753
US-A- 4 792 503
EXTENDED ABSTRACTS, vol. 84, no. 2,
October 1984, Princeton, NJ (US); S.C. LEVY et
al., p. 828, no. 567

(56) References cited :
SANDIA REPORT - SAND83-2301/2, vol. 2,
June 1984; S.C. DOUGLAS et al., pp. 1-66
CHEMICAL ABSTRACTS, vol. 109, no. 14,
October 1988, Columbus, OH (US); F.S.
BOVARD et al., p. 179, no. 113389w
WPIL, Section Ch, Week 8327, 23 August 1982,
Derwent Publications Ltd., London (GB); Class
L, AN 83-703912

(73) Proprietor : **MEDTRONIC, INC.**
**7000 Central Avenue N.E.**
**Minneapolis, Minnesota 55432-3576 (US)**

(72) Inventor : **Taylor, William John**
**106 Yoho Drive**
**Anoka, MN 55303 (US)**
Inventor : **Lessar, Joseph F.**
**3742 114th Lane N.**
**Coon Rapids, MN 55433 (US)**

(74) Representative : **Cockbain, Julian, Dr. et al**
**Frank B. Dehn & Co.**
**Imperial House**
**15-19 Kingsway**
**London WC2B 6UZ (GB)**

EP 0 412 655 B1

## Description

The invention relates to improvements in and relating to electrical devices, in particular devices incorporating feedthroughs comprising glass seals.

Glass seals are used in various arrangments including batteries and other electrochemical cells. For example, in battery headers, glass seals are used to seal the battery container while allowing one or more electrical contacts to extend through the seal for interior/exterior connection thereto. The term "feedthrough" is used herein to describe such arrangements in generic fashion.

In certain batteries and electrochemical cells, glass corrosion has been encountered. For example, batteries of the $Li/SO_2$ system, $Li/SOCl_2$ system and other organic electrolyte systems have given rise to corrosion and cracking of the glass seals.

Special glass compositions have been developed to combat such problems. Sandia National Laboratories has been instrumental in developing a low-silica composition glass, that is a composition containing less than about 50 weight % (or mole %) silica, which is generally referred to as TA-23 glass.

Although this glass has been a desirable improvement from the corrosion and cracking standpoint, it has been difficult to find metal alloys which will reliably wet the glass to form a strong, hermetic seal with it and which work well in the other aspects of seal forming such as weldability.

We have now found that particularly good seals for feedthroughs, especially for those contacting agressive chemical compositions, may be produced using the combination of low-silica glasses (in particular TA-23 and similar glasses (in particular TA-23 and similar glasses) and certain molybdenum alloy substrates.

Thus viewed from one aspect the invention provides an electrical device having a metal surface disposed about a feedthrough aperture, said aperture being sealed by a glass body contacting said surface, characterized in that said glass has the composition

| | |
|---|---|
| $SiO_2$ | 44.95 ± 4.0 weight percent, |
| $Al_2O_3$ | 20.0 ± 2.0 weight pecent, |
| $B_2O_3$ | 8.0 ± 1.0 weight percent, |
| $La_2O_3$ | 2.0 ± 0.5 weight percent, |
| CaO | 12.0 ± 1.0 weight percent, |
| MgO | 7.0 ± 1.0 weight percent, |
| SrO | 6.0 ± 1.0 weight percent, and |
| CoO | up to 0.07 weight percent |

and in that said metal is an alloy comprising molybdenum, chromium and nickel.

In a particularly simple embodiment, the device according to the invention may comprise simply a molybdenum alloy surround disposed about or defining a feedthrough aperture which is sealed by a glass body and which has an electrical lead passing through it. Such a feedthrough assembly may then be welded or otherwise bonded for example into an aperture in a container wall.

Particularly suitably, in the device of the invention the glass seal, through which an electrical lead may pass, serves to seal off a corrosive chemical composition, such as the content of an electrochemical cell, and in particular a lithium based cell. The glass is preferably of the TA-23 composition or of a similar type and the metal surface it wets is preferably a molybdenum alloy containing greater than about 1% by weight molybdenum, especially preferably at least 2% by weight, particularly preferably 2 to 20% by weight most preferably 2 to 10% by weight of molybdenum. Alloys of molybdenum with metals selected from chromium, iron, nickel, cobalt, niobium and copper, especially alloys containing at least Mo, Cr, Fe and Ni are preferred.

In a preferred embodiment the invention relates more specifically to devices including hermetic, corrosion resistant, compression-type sealed feedthroughs utilizing single or multiple terminal(s) or pin(s) of niobium, molybdenum or tantalum or suitable alloy and contained within a header or sleeve of one of several specific molybdenum alloys, MP35N being preferred. In its most preferred form this preferred seal arrangement is included in an electrochemical cell, e.g. a lithium thionyl chloride cell or cells of other active chemistries such as $MnO_2$, for example.

Using the glass/metal combination according to the invention a hermetic glass to metal seal may reliably be formed, advantageously without requiring the exertion of pressure.

In one preferred embodiment, the device of the invention is an electrical feedthrough assembly comprising an electrical terminal; a glass insulator of the type TA-23 composition positioned around a portion of the terminal and in sealing engagement therewith; and a sleeve or header comprised of the molybdenum containing alloy positioned around a portion of the glass insulator for receiving same in sealing engagement therewith.

In another preferred embodiment, the device of the invention is a glass/metal feedthrough assembly of the compression type including an electrical terminal consisting essentially of molybdenum, niobium or tantalum or a suitable alloy; a glass insulator of type TA-23 composition positioned around a portion of the terminal and in sealing engagement therewith; and a sleeve or header consisting essentially of an alloy comprising molybdenum, chromium and nickel positioned around a portion of the glass insulator for receiving same in sealing engagement therewith.

In a further preferred embodiment, the device of the invention is an electrochemical cell of the type including corrosive contents in a container and wherein the container includes an opening carrying an electrical terminal which extends from the exterior of the cell through the opening and into the interior thereof; a feedthrough assembly positioned in the opening and around the terminal, the assembly comprising a sleeve or header consisting essentially of a molybdenum-containing alloy having greater than about 1 weight % molybdenum, and a glass seal carried by the sleeve or header and surrounding the terminal in sealing engagement therewith, the glass being of a type TA-23 composition.

Embodiments of devices according to the invention will now be described by way of example and with reference to the accompanying drawings, in which:-

Fig. 1 is a schematic cross-section of a battery header forming part of a device in accordance with the invention; and

Fig. 2 is a partial schematic cross-section of a feedthrough with sleeve combined with a container for an electrochemical cell according to the invention.

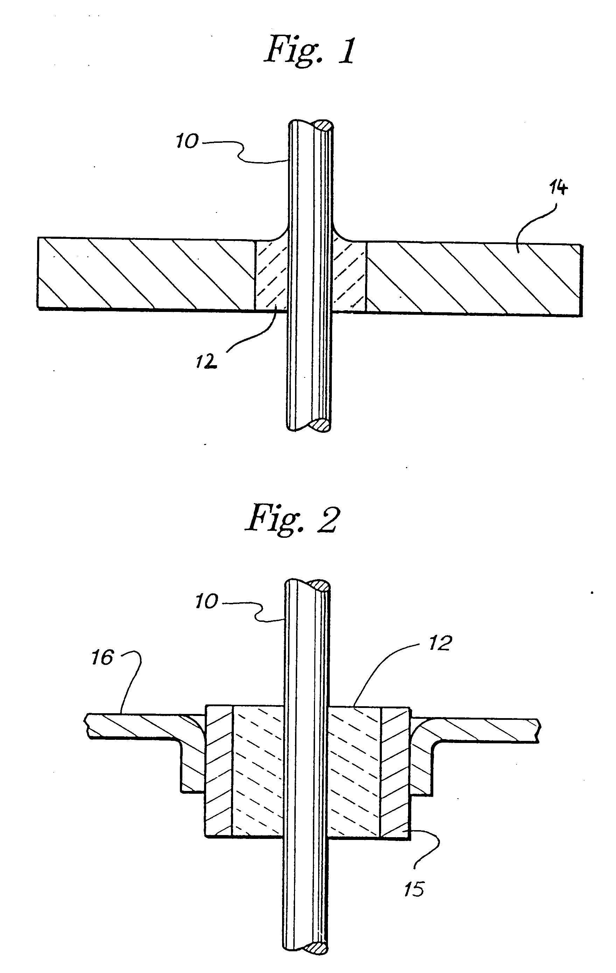

Referring to Fig. 1, a header of typical construction is shown which includes a center pin or electrical contact 10, a glass seal member 12 and an outer conductor member 14. This arrangement and that of Fig. 2 are typical seal arrangements in accordance with the invention. Other arrangements may be used as well and may take any configuration in which the alloy is wetted by the glass.

Referring now to Fig. 2 the feedthrough arrangement in a preferred form includes a terminal 10 extending through a glass seal 12 which is received into a sleeve or header 15. Sleeve 15 may be welded into an opening in a container 16 of, for example, stainless steel.

The component assembly, requiring no forming weights, is placed in an oven or furnace and heated so causing the glass to wet the metallic components forming a hermetic seal between the glass and the metal components. Such a feedthrough may thereafter be welded if necessary, into any desirable container or the like.

In its preferred form, terminal 10 consists essentially of molybdenum, niobium or tantalum or a suitable alloy. The glass 12 is of the low-silica type such as TA-23 which is of the following composition, referred to herein as "Type TA-23 composition":

| Composition | Weight % Oxide |
|---|---|
| $SiO_2$ | $44.95 \pm 4.0$ |
| $Al_2O_3$ | $20.0 \pm 2.0$ |
| $B_2O_3$ | $8.0 \pm 1.0$ |
| $La_2O_3$ | $2.0 \pm 0.5$ |
| $CaO$ | $12.0 \pm 1.0$ |
| $MgO$ | $7.0 \pm 1.0$ |
| $SrO$ | $6.0 \pm 1.0$ |
| $CoO$ | $0.05 \pm 0.02$ |

In this glass, the CoO concentration may be reduced or CoO may be entirely omitted and such a resultant composition (most preferred herein) is also included within the term "Type TA-23 composition" as used herein. Such a composition will generally be within about the following composition, preferably;

| Oxide | Weight % |
|---|---|
| $SiO_2$ | 45.0 |
| $Al_2O_2$ | 20.0 |
| $B_2O_3$ | 8.0 |
| CaO | 12.0 |
| SrO | 6.0 |
| MgO | 7.0 |
| $La_2O_3$ | 2.0 |

The sleeve 15 is of a molybdenum alloy having greater than about 2 weight % Mo, 2-20 weight % being preferred. MP35N is a very suitable alloy, particularly when it is used with a terminal of Mo, Nb or Ta, and in the configuration shown in Fig. 2, a compression seal is formed which is hermetic and corrosion resistant. MP35N is of the following nominal composition:

| | | (Weight %) | | |
|---|---|---|---|
| Cr | Mo | Ni | Co |
| 20.0 | 10.0 | 35.0 | Bal |

(Bal = balance)

Examples of other molybdenum alloys which may be used include the following:

(Weight %)

316SS

| | Cr | Mo | Fe | Ni | |
|---|------|-----|-----|------|---|
| | 17.0 | 2.5 | Bal | 12.0 | |

Hastelloy C-276

| | Cr | Mo | Fe | Ni | Co |
|---|------|----|-----|-----|-----|
| | 15.5 | 16 | 5.5 | Bal | 2.5 |

Elgiloy

| | Cr | Mo | Fe | Ni | Co |
|---|----|----|----|----|-----|
| | 20 | 7 | 16 | 15 | Bal |

Inconel

| | Cr | Mo | Fe | Ni | Nb |
|---|----|----|----|------|-----|
| | 22 | 9 | 5 | 64.7 | 3.6 |
| | | | | (Bal) | |

CB20-3

| | Cr | Mo | Fe | Ni | Cu |
|---|----|-----|-----|----|-----|
| | 20 | 2.5 | Bal | 33 | 3.2 |

In their most preferred forms, the devices of the invention are electrochemical cells such as the aforementioned types or are hermetic, corrosion resistant feedthrough assemblies for use for example in the manufacture of such cells.

**Claims**

1. An electrical device having a metal surface disposed about a feedthrough aperture, said aperture being sealed by a glass body contacting said surface,
   characterized in that said glass (12) has the composition
   
   | | |
   |---|---|
   | SiO$_2$ | 44.95 ± 4.0 weight percent, |
   | Al$_2$O$_3$ | 20.0 ± 2.0 weight pecent, |
   | B$_2$O$_3$ | 8.0 ± 1.0 weight percent, |
   | La$_2$O$_3$ | 2.0 ± 0.5 weight percent, |
   | CaO | 12.0 ± 1.0 weight percent, |
   | MgO | 7.0 ± 1.0 weight percent, |
   | SrO | 6.0 ± 1.0 weight percent, and |
   | CoO | up to 0.07 weight percent |
   
   and in that said metal (14, 15) is an alloy comprising molybdenum, chromium and nickel.

2. A device as claimed in claim 1 wherein said alloy (14, 15) contains at least 1% by weight of molybdenum.

3. A device as claimed in claim 1 wherein said alloy (14, 15) contains from 2 to 20% by weight of molybdenum.

4. A device as claimed in claim 1 wherein said alloy (14, 15) contains from 2 to 10% by weight of molybdenum.

5. A device as claimed in any one of the preceding claims wherein said alloy (14, 15) contains at least one further metal selected from Fe, Co, Nb and Cu.

6. A device as claimed in claim 5 wherein said alloy (14, 15) is selected from MP35N, 316SS, Hastelloy C-276, Elgiloy, Inconel and CB20-3.

7. A device as claimed in any one of the preceding claims wherein said glass (12) is penetrated by an electrical lead (10).

8. A device as claimed in claim 7 wherein said lead (10) is of molybdenum, niobium, tantalum or an alloy thereof.

9. A device as claimed in either of claims 7 and 8 being an electrical feedthrough assembly comprising a sleeve or header member (15) of a said alloy comprising molybdenum, chromium and nickel disposed about a feedthrough aperture penetrated by a said lead (10) and having a hermetic compression-type seal provided by said glass (10).

10. A device as claimed in either one of claims 7 and 8 wherein said feedthrough aperture is in the wall of a container.

11. A device as claimed in claim 10 being an electrochemical cell having a corrosive material disposed in said container.

12. A device as claimed in claim 11 wherein said cell is based on lithium chemistry.

## Patentansprüche

1. Elektrische Vorrichtung mit einer Metalloberfläche, die eine Durchführungsöffnung umgibt, wobei die Öffnung mit einem die Oberfläche kontaktierenden Glaskörper versiegelt ist,
dadurch gekennzeichnet, daß das Glas (12) wie folgt zusammengesetzt ist:
$SiO_2$      $44,95 \pm 4,0$ Gewichtsprozent,
$Al_2O_3$      $20,0 \pm 2,0$ Gewichtsprozent,
$B_2O_3$      $8,0 \pm 1,0$ Gewichtsprozent,
$La_2O_3$      $2,0 \pm 0,5$ Gewichtsprozent,
CaO      $12,0 \pm 1,0$ Gewichtsprozent,
MgO      $7,0 \pm 1,0$ Gewichtsprozent,
SrO      $6,0 \pm 1,0$ Gewichtsprozent, und
CoO      bis zu 0,07 Gewichtsprozent,
und daß das Metall (14,15) eine Legierung ist, die Molybdän, Chrom und Nickel umfaßt.

2. Vorrichtung gemäß Anspruch 1, wobei die Legierung (14,15) wenigstens 1 Gewichtsprozent Molybdän enthält.

3. Vorrichtung gemäß Anspruch 1, wobei die Legierung (14,15) 2 bis 20 Gewichtsprozent Molybdän enthält.

4. Vorrichtung gemäß Anspruch 1, wobei die Legierung (14,15) 2 bis 10 Gewichtsprozent Molybdän enthält.

5. Vorrichtung gemäß einem der vorhergehenden Ansprüche, wobei die Legierung (14,15) wenigstens ein weiteres Metall enthält, das aus Fe, Co, Nb und Cu ausgewählt ist.

6. Vorrichtung gemäß Anspruch 5, wobei die Legierung (14,15) ausgewählt ist aus MP35N, 316SS, Hastelloy C-276, Elgiloy, Inconel und CB20-3.

7. Vorrichtung gemäß einem der vorhergehenden Ansprüche, wobei das Glas (12) von einer elektrischen Leitung (10) durchdrungen ist.

8. Vorrichtung gemäß Anspruch 7, wobei die Leitung (10) aus Molybdän, Niob, Tantal oder einer Legierung dieser Materialien besteht.

9. Vorrichtung gemäß Anspruch 7 oder gemäß Anspruch 8, wobei die Vorrichtung eine elektrische Durchführungsanordnung ist, die eine Muffe oder ein Kopfteil umfaßt, das aus der besagten, Molbydän, Chrom und Nickel umfassenden Legierung besteht und das eine Durchführungsöffnung umgibt, die von einer Leitung (10) durchdrungen ist, und eine mittels des Glases (10) erzeugte hermetische Druckdichtung aufweist.

10. Vorrichtung gemäß Anspruch 7 oder gemäß Anspruch 8, wobei die Durchführungsöffnung in der Wand eines Behälters angeordnet ist.

11. Vorrichtung gemäß Anspruch 10, wobei die Vorrichtung eine elektrochemische Zelle ist, die ein in dem Behälter befindliches korrodierendes Material aufweist.

12. Vorrichtung gemäß Anspruch 11, wobei die Zelle auf lithiumchemischer Basis arbeitet.

**Revendications**

1. Dispositif électrique comportant une surface métallique disposée autour d'une ouverture de traversée, ladite ouverture étant scellée par un corps en verre en contact avec ladite surface, caractérisé en ce que ledit verre (12) a la composition

$SiO_2$      44,95 ± 4,0 pourcents en poids,
$Al_2O_3$      20,0 ± 2,0 pourcents en poids,
$B_2O_3$      8,0 ± 1,0 pourcents en poids,
$La_2O_3$      2,0 ± 0,5 pourcents en poids,
CaO      12,0 ± 1,0 pourcents en poids,
MgO      7,0 ± 1,0 pourcents en poids,
SrO      6,0 ± 1,0 pourcents en poids, et
CoO      jusqu'à 0,07 pourcents en poids

et en ce que ledit métal (14, 15) est un alliage comprenant du molybdène, du chrome et du nickel.

2. Dispositif selon la revendication 1, dans lequel ledit alliage (14, 15) contient au moins 1 % en poids de molybdène.

3. Dispositif selon la revendication 1, dans lequel ledit alliage (14, 15) contient entre 2 et 20 % en poids de molybdène.

4. Dispositif selon la revendication 1, dans lequel ledit alliage (14, 15) contient entre 2 et 10 % en poids de molybdène.

5. Dispositif selon l'une quelconque des revendications précédentes, dans lequel ledit alliage (14, 15) contient au moins un autre métal sélectionné parmi le Fe, le Co, le Nb et le Cu.

6. Dispositif selon la revendication 5, dans lequel ledit alliage (14, 15) est sélectionné parmi le MP35N, le 316SS, l'Hastelloy C-276, l'Elgiloy, l'Inconel et le CB20-3.

7. Dispositif selon l'une quelconque des revendications précédentes, dans lequel ledit verre (12) est pénétré par un conducteur électrique (10).

8. Dispositif selon la revendication 7, dans lequel ledit conducteur (10) est en molybdène, en niobium, en tantale ou en un alliage de ceux-ci.

9. Dispositif selon l'une quelconque des revendications 7 et 8, constituant un assemblage de traversée électrique comprenant un élément de manchon ou d'embase (15) en un alliage comprenant du molybdène, du chrome et du nickel, disposé autour d'une ouverture de traversée pénétrée par ledit conducteur (10) et comportant un joint hermétique du type à compression fourni par ledit verre (10).

10. Dispositif selon l'une quelconque des revendications 7 et 8, dans lequel ladite ouverture de traversée est située dans la paroi d'un conteneur.

**11.** Dispositif selon la revendication 10, constituant une pile électrochimique comportant un matériau corrosif disposé dans ledit conteneur.

**12.** Dispositif selon la revendication 11, dans lequel ladite pile est à base d'un produit chimique au lithium.

*Fig. 1*

*Fig. 2*